# EUROPÄISCHE PATENTSCHRIFT

(11) **EP 2 871 733 B1**
(45) Veröffentlichungstag und Bekanntmachung des Hinweises auf die Patenterteilung: **20.01.2021**
(21) Anmeldenummer: 13192377.3
(22) Anmeldetag: 11.11.2013
(51) Int. Cl.: H02G 1/12

(54) **Vorrichtung zum Schneiden des aufgestellten Schirms eines Kabels**
Apparatus for cutting the opened screen of a cable
Dispositif de découpe du blindage posé d'un câble

(43) Veröffentlichungstag der Anmeldung: 13.05.2015
(73) Patentinhaber: Schleuniger AG, 3608 Thun (CH)
(72) Erfinder: Messina, Carmelo, 6343 Rotkreuz (CH); Alvarez, Sergio, 8630 Rüti (CH); Knuchel, Walter, 8624 Grüt (CH); Meierhans, Ivo, 6005 Luzern (CH)
(74) Vertreter: Patentbüro Paul Rosenich AG

(56) Entgegenhaltungen:
- EP-A1- 1 022 821
- EP-A1- 1 096 628
- JP-A- S5 468 993
- JP-A- S63 249 110
- JP-A- 2000 102 133
- JP-A- 2001 045 623
- JP-A- 2002 101 515
- US-A- 4 719 697

## Beschreibung

Die Erfindung betrifft eine Vorrichtung zum Schneiden eines aufgestellten Schirms eines Kabels, nach dem Oberbegriff des Anspruchs 1.

Die Bearbeitung von mehradrigen Kabeln, die insbesondere mit einem Schirmgeflecht und einer äusseren Ummantelung, allenfalls auch mit einer die Adern umhüllenden Folie und/oder einem zentralen Füller, versehen sind, umfasst zumindest einen der Verfahrensschritte Ablängen, Abmanteln der Leitung, Kürzen und Zurückstülpen des Schirms, Entfernen der Folie und Entfernen des innenliegenden Füllers.

Dabei stellen insbesondere HSD (High Speed Data)-Produkte sehr hohe Anforderungen an den Verarbeitungsprozess. So ist es derzeit noch nicht möglich, HSD-Kabel komplett vollautomatisch zu bearbeiten. Aktuell werden die Verarbeitungsschritte abmanteln, Schirmgeflecht schneiden und zurückstülpen, Folie sowie Füller entfernen manuell oder halbautomatisch auf einzelnen Stationen durchgeführt. Erst die weitere Verarbeitung erfolgt dann auf einem Vollautomaten. Auch der Bearbeitungsschritt des Schneidens des Schirms wird derzeit bestenfalls halbautomatisch durchgeführt.

Die JPS5468993A offenbart in diesen Zusammenhang zwei gegeneinander axial bewegliche Teile in Form von zylindrischen Schneideeinrichtungen, die einen durch Stauchen mittels eines dieser beweglichen Teile nach aussen ragenden Abschnitts des Schirms eines Kabels durchtrennen. Der verbleibende Abschnitt des Schirms bleibt in der ursprünglichen Richtung am Kabel anliegend. Die beiden schneidenden Elemente bilden, sobald sie ineinander geschoben werden, eine Art buchsenförmige Aufnahme für das Kabel.

Die JP2002101515A als auch die JP2001045623 offenbaren gleichartige Anordnungen, bei welchen der Schirm eines Kabels durch zwei axial gegeneinander bewegbare Schneideelemente durchtrennt wird. Auch hier ist kein Element mit Haltewirkung auf den aufgestellten Schirm vorgesehen, insbesondere keine Anordnung aus zwei axial beweglichen Teilen, zwischen deren Stirnseiten der aufgestellte Schirm für den Schneidevorgang sicher fixiert wird.

Die EP1096628A1 offenbart eine Einrichtung zum Abtrennen der Abschirmung von einem Kabel. Dabei wird die Abschirmung mittels einer feststehenden ersten Klemmeinrichtung und einer verschiebbaren zweiten Klemmeinrichtung zusammengeschoben, wodurch sich die Abschirmung radial nach außen verformend aufweitet. Mittels einer Schneideinheit wird ein Teilstück der Abschirmung abgeschnitten. Die Schneideinrichtung ist entsprechend zuführbar und in Umfangsrichtung um die Längsachse des Kabels herumführbar.

Aufgabe der vorliegenden Erfindung ist es somit, eine Vorrichtung für die Integration in eine vollautomatische Anlage zur Kabelbearbeitung, insbesondere für HSD-Produkte, auszugestalten. Damit soll auch die Verbindung eines Vollautomaten für die Verarbeitung von zumindest an einem Ende vorbereiteten Kabeln mit der möglichst auch vollautomatischen Anlage zur Kabelvorbearbeitung ermöglicht werden.

Die Aufgabe wird durch die Merkmale des unabhängigen Anspruchs gelöst. Vorteilhafte Weiterbildungen sind in den Figuren und in den abhängigen Patentansprüchen dargelegt.

Die Erfindung betrifft somit eine Vorrichtung zum Schneiden eines aufgestellten Schirms eines Kabels, umfassend eine Halteanordnung/Klemmvorrichtung zum Klemmen des abgemantelten und vorzugsweise mit einer Stützhülse versehenen Kabels, vorzugsweise mit einer Zentriereinrichtung, mit einer Schneideeinrichtung, umfassend eine buchsenförmige Aufnahme für das abgemantelte Ende des Kabels, sowie eine Sensor- und Steuereinrichtung für die Vorrichtung, allenfalls als Modul einer übergeordneten Anlagensteuerung, wobei die buchsenförmige Aufnahme in axialer Richtung aus zwei relativ zueinander bewegbaren Abschnitten besteht.

Die Vorrichtung so ausgelegt ist, dass dass die einander zugewandte Stirnseiten der Abschnitte je eine ringförmige Klemm- und Fixierfläche im radial äusseren Bereich aufweisen, die in einer Endstellung aneinander anliegen, dass die Schneideeinrichtung zumindest eine ausserhalb der buchsenförmigen Aufnahme bzw. der ringförmigen Klemm- und Fixierflächen bewegliche, vorzugsweise ringförmige, Schneide aufweist. Damit ist eine genau definierte Position und Fixierung des geöffneten Schirms gewährleistet, der dann entsprechend genau auf die gewünschte, durch die Dimensionen der Aufnahme definierte und durch die Wahl dieser Dimensionen einstellbare Länge geschnitten werden kann. Erfindungsgemäß ist dabei vorgesehen, dass die buchsenförmige Aufnahme eine im Wesentlichen zylindermantelförmige äussere Oberfläche aufweist und die Schneideeinrichtung durch einen Ring gebildet ist, der axial entlang der äusseren Oberfläche der Aufnahme über die Ebene der einander zugewandten Stirnseiten der beiden Abschnitte der Aufnahme verschiebbar ist und eine inneren ringförmige Schneidekante aufweist. Damit ist eine einfache und exakte Führung der Schneidekante gewährleistet. Vorzugsweise bilden die einander zugewandten Stirnflächen der beiden relativ zueinander bewegbaren Abschnitte der Aufnahme im Wesentlichen jeweils einen sich in Richtung auf die Halteanordnung hin öffnenden Konus. Damit ist eine auch eine gewissen Vorverformung des Schirms in Richtung auf dessen Position im fertig verarbeiteten Kabel bereits während des Schneidevorganges machbar.
Bevorzugt ist weiters vorgesehen, dass der der Halteanordnung/Klemmvorrichtung zugewandte Abschnitt der Aufnahme mit einem sich auf das Kabel hin öffnenden Führungskonus versehen ist, wodurch die Einführung des Kabelendes erleichtert und eine Vorverformung des Schirms bereits während des Einführ- und Zentriervorganges bewirkt wird.

Ebenfalls ist bevorzugt, dass der von der Halteanordnung/Klemmvorrichtung entferntere Abschnitt der Aufnahme mit einem sich auf die Halteanordnung/Klemmvorrichtung hin öffnenden Führungskonus versehen ist.

Eine weitere Ausführungsform der Erfindung ist dadurch gekennzeichnet, dass die Steuereinrichtung ausgelegt ist im Betriebsfall eine axiale Relativbewegung des dem Kabel zugewandten Abschnitts der Aufnahme und der Halteanordnung in einer Länge zu bewirken, bis der Schirm zur Gänze durch den dem Kabel zugewandten Abschnitt hindurchgeführt ist, wobei in diesem Betriebsfall die beiden Abschnitte der Aufnahme voneinander beabstandet sind oder im Zuge der Relativbewegung von Aufnahme und Halteanordnung/Klemmvorrichtung axial voneinander weg verfahrbar sind, wonach die Halteanordnung/Klemmvorrichtung und der der Halteanordnung zugewandte Abschnitt der Aufnahme ein Stück in Gegenrichtung bewegbar ist, so dass der Schirm an der der Halteanordnung abgewandten Stirnseite des der Halteanordnung näherliegenden Abschnitts anliegt, wonach die beiden Abschnitte der Aufnahme aufeinander zu verfahrbar sind bis der Schirm zwischen den beiden Stirnseiten geklemmt ist, wonach die Schneideeinrichtung aktivierbar ist. Damit ist eine sichere und rasche Stellung des Schirms in die für den Schneidevorgang vorgesehene Position und die sichere Fixierung in dieser Position gewährleistet.

Vorzugsweise mündet im Bereich der einander zugewandten Stirnseiten der beiden Abschnitte der Aufnahme zumindest eine mit einer Absaugeinrichtung verbundene Absaugöffnung, was einen schnellen und gründlichen Abtransport der weggeschnittenen Abschnitte des Schirms gestattet. Damit ist kaum mit einer Verschmutzung der Vorrichtung zu rechnen, die damit lange störungs- und wartungsfrei betrieben werden kann. Bevorzugt ist vorgesehen, dass zwischen der Aufnahme und der Halteanordnung eine vom abgemantelten Ende in Richtung des noch umhüllten Abschnitts des Kabels in axialer Richtung verfahrbare Scheibe mit einer Durchtrittsöffnung für das Kabel vorgesehen ist, welche Scheibe aus zumindest zwei im Wesentlichen radial zum Kabel bewegbaren Teilen besteht, wobei der Durchmesser der Durchtrittsöffnung geringfügig grösser ist als jener der innerhalb des Schirms liegenden Elemente des Kabels, und die Steuereinrichtung ausgelegt ist nach der Schirmbearbeitung eine Annäherung der Scheibe an die Halteanordnung entlang des Kabels in einer Länge zu bewirken, bis der Schirm an einer vorzugsweise vorhandenen Stützhülse und/oder dem Kabelmantel anliegt. Durch diese Zusatzvorrichtung wird der Schirm bereits in der Schneidestation in seine endgültige Lage gebracht, welche er im fertig verarbeiteten Kabel einnehmen soll.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Vorrichtung vor Beginn der Bearbeitung des antransportierten Kabels,
- Fig. 2: die Vorrichtung von Fig. 1 mit in der Halteanordnung geklemmtem Kabel,
- Fig. 3: die Vorrichtung von Fig. 1 und 2 mit dem Kabel in maximal vorgeschobener Stellung, nachfolgend auf die Positionen der Fig. 1 und 2,
- Fig. 4: die Vorrichtung der Fig. 1 mit wieder etwas zurückgezogenem Kabel und anliegendem Schirm, nachfolgend der Position der Fig. 3,
- Fig. 5: die Vorrichtung der Fig. 1 bis 4 mit durch Klemmung fixiertem Schirm, nachfolgend der Position der Fig. 4,
- Fig. 6: die Vorrichtung der Fig. 1 bis 5 mit betätigter Schneidevorrichtung, nachfolgend auf die Position der Fig. 5, und
- Fig. 7: die Vorrichtung der Fig. 1 bis 6 mit aus dem Berarbeitungskopf gezogenem Kabel und daran angenäherter Einrichtung zum Zurückstülpen des geschnittenen Schirms, vor deren Betätigung, nachfolgend der Position der Fig. 6.

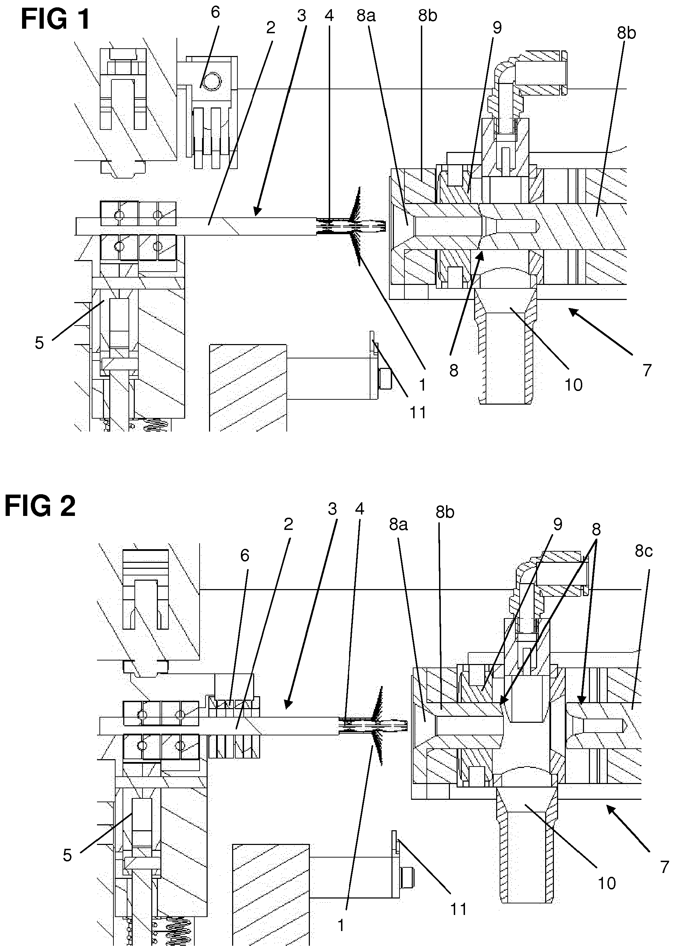

Fig. 1 zeigt beispielhaft ein konkretes Ausführungsbeispiel einer Vorrichtung zum Schneiden und vorteilhafterweise auch Zurückstülpen eines bereits geöffnet vorliegenden geflochtenen Schirms 1 am Ende eines mit einer Ummantelung 2 versehenen Kabels 3, das allenfalls auch eine Schirmfolie (nicht dargestellt) aufweist. Zentral weist das Kabel 3 vorzugsweise mehrere Leiter 4 oder Litzen auf. Das Kabel 3 wird durch ein Transportsystem, beispielsweise eine entlang einer Führungsbahn verfahrbare Transportpalette 5, angeliefert und gelangt so zur Arbeitsstation für das Schneiden des Schirms 1, wo es durch deren Halteanordnung/Klemmvorrichtung 6 (in Fig. 1 noch in geöffnetem Zustand dargestellt) geklemmt wird (wie in Fig. 2 dargestellt ist). Das zur Bearbeitung vorgesehene Ende des Kabels 3 ist bereits vorher abgemantelt, vorzugsweise mit einer Stützhülse versehen, und der Schirm geöffnet und gegebenenfalls aufgestellt worden.

Der Bearbeitungskopf 7 der erfindungsgemässen Vorrichtung umfasst eine buchsenförmige Aufnahme 8 mit einer Durchführöffnung 8a für das abgemantelte Ende des Kabels 3, wobei diese Aufnahme 8 in axialer Richtung aus zwei relativ zueinander bewegbaren Abschnitten 8b, 8c besteht. Die einander zugewandte Stirnseiten der Abschnitte 8b, 8c weisen je eine ringförmige Fläche im radial äusseren Bereich auf, welche Flächen in der Endstellung der bewegbaren Abschnitte 8b, 8c, in welcher sie sich am nächsten zueinander befinden, aneinander anliegen. Der Schirm 1 des Kabels 3 kann zwischen diesen Flächen eingeklemmt und damit für den Schneidevorgang sicher fixiert werden. Vorzugsweise bilden die einander zugewandten Stirnflächen der beiden relativ zueinander bewegbaren Abschnitte 8b, 8c im Wesentlichen jeweils einen sich in Richtung auf die Halteanordnung 6 hin öffnenden Konus.

Entlang der vorzugsweise zylindermantelförmigen äusseren Oberfläche der buchsenförmigen Aufnahme 8 ist eine Schneideeinrichtung bewegbar, die vorteilhafterweise durch einen Ring 9 gebildet ist, der axial entlang der äusseren Oberfläche der Aufnahme 8 bewegbar ist, und zwar über die Ebene der einander zugewandten Stirnseiten der beiden Abschnitte 8b, 8c der Aufnahme 8 hinaus. Dabei schneidet eine innere ringförmige Schneidekante dieses Rings 9 die über die zylindermantelförmige äussere Oberfläche hinausragenden Abschnitte des Schirms 1, der zwischen den beiden Abschnitten 8b, 8c geklemmt ist, ab. Die Ebene der ringförmigen Schneidekante des Rings 9 kann allenfalls gegenüber einer normal auf die Kabelachse orientierten Ebene geneigt sein, so dass nicht alle Umfangsbereiche des Schirms 1 gleichzeitig geschnitten und damit die Kräfte auf den Schirm verringert werden.

Vorteilhafterweise ist der der Halteanordnung/Klemmvorrichtung 6 zugewandte Abschnitt 8b der Aufnahme 8 mit einem sich in Richtung Halteanordnung/Klemmvorrichtung 6 hin öffnenden Führungskonus versehen ist, ebenso vorzugsweise auch der von der Halteanordnung/Klemmvorrichtung 6 entferntere Abschnitt 8c der Aufnahme 8 mit einem sich auf die Halteanordnung/Klemmvorrichtung 6 hin öffnenden Führungskonus versehen ist.

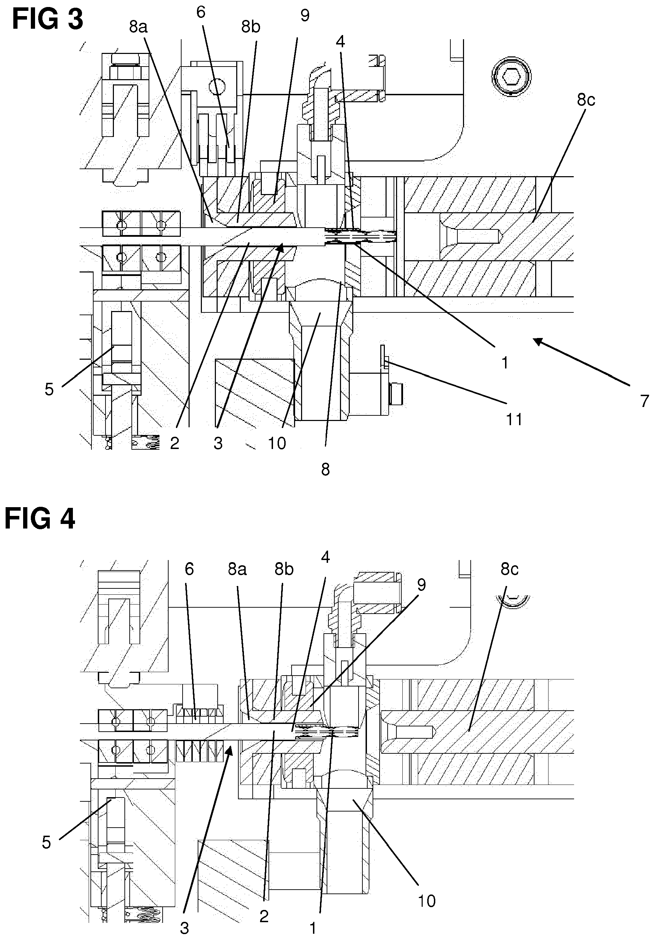

In der Steuereinrichtung für die erfindungsgemässe Vorrichtung, die auch als Modul einer übergeordneten Anlagensteuerung realisiert sein kann, ist in Form vorzugsweise eines gespeicherten lauffähigen Computerprogrammproduktes ein Verfahrensablauf implementiert, der die Abläufe zur Bewegung und Aktivierung der einzelnen Elemente der Vorrichtung steuert. So umfasst dieser Ablauf im Betriebsfall eine axiale Relativbewegung des der Halteanordnung/Klemmvorrichtung 6 zugewandten Abschnitts 8b der Aufnahme 8 und der Halteanordnung/Klemmvorrichtung 6 in einer Länge, bis der Schirm 1 zur Gänze -was natürlich nur den freigelegten Abschnitt des Schirms 1 im abgemantelten Abschnitt des Kabels 3 betrifft - durch den vorderen Abschnitt 8b hindurchgeführt ist. Diese Position ist in Fig. 3 dargestellt, wo auch zu erkennen ist, dass in diesem Betriebsfall die beiden Abschnitte 8b, 8c der Aufnahme 8 voneinander beabstandet sind. Dazu sind diese Abschnitte 8b, 8c spätestens im Zuge der Relativbewegung von Aufnahme 8 und Halteanordnung/Klemmvorrichtung 6 axial voneinander weg verfahrbar. Allenfalls muss für diesen Vorgang auch - wie in Fig. 3 angedeutet ist-die Halteanordnung/Klemmvorrichtung 6 kurzzeitig geöffnet werden.

Anschliessend werden die Halteanordnung/Klemmvorrichtung 6 und der der Halteanordnung 6 zugewandte Abschnitt 8b der Aufnahme 8 ein Stück in Gegenrichtung bewegt, so dass der Schirm 1 an der der Halteanordnung/Klemmvorrichtung 6 abgewandten Stirnseite des der Halteanordnung/Klemmvorrichtung 6 näherliegenden Abschnitts 8b anliegt, wie dies in Fig. 4 dargestellt ist.

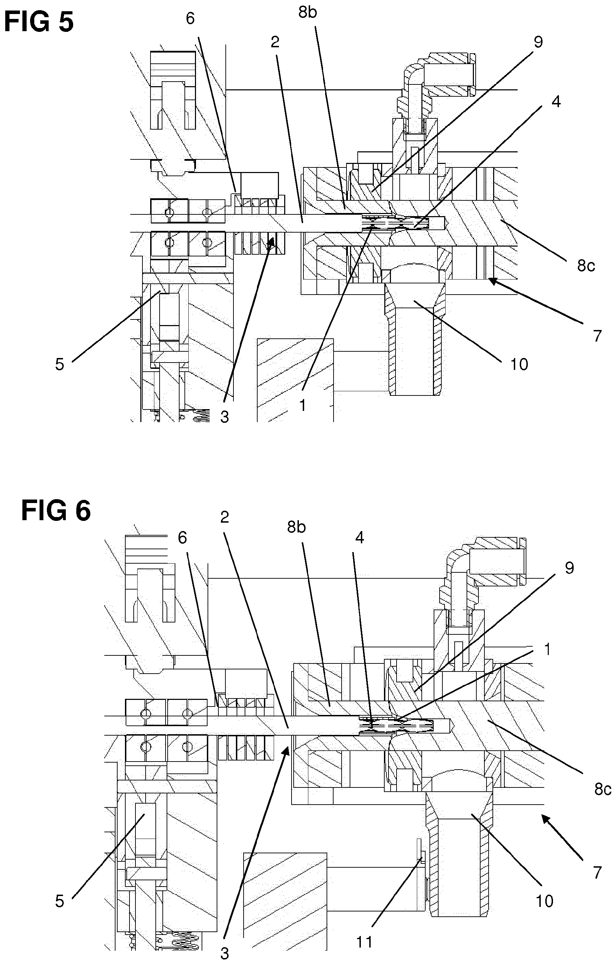

Fig. 5 zeigt dann die nächste Position im Prozessablauf des Schneidens des Schirms 1 mit der erfindungsgemässen Vorrichtung, in welcher die beiden aufeinander zu verfahrbaren Abschnitte 8b, 8c einander grösstmöglich angenähert sind, um den bis der Schirm 1 zwischen den beiden einander zugewandten Stirnseiten der Abschnitte 8b, 8c einzuklemmen und zu fixieren. Anschliessend kann die Schneidevorrichtung aktiviert werden, insbesondere der axial ververfahrbare Ring 9 mit seiner inneren Schneidkante über die Ebene der einander zugewandten Stirnseiten der Abschnitte 8b, 8c der Aufnahme 8 geführt werden, wie in Fig. 6 zu erkennen ist.

Der Abtransport der abgeschnittenen Stücke des Schirms 1 erfolgt über eine im Bereich der einander zugewandten Stirnseiten der beiden Abschnitte 8b, 8c mündende Absaugöffnung 10, die mit einer Absaugeinrichtung verbunden ist. Allenfalls könnte auch eine Auswurföffnung zum Herausfallen der weggeschnittenen Schirmteile ausreichen.

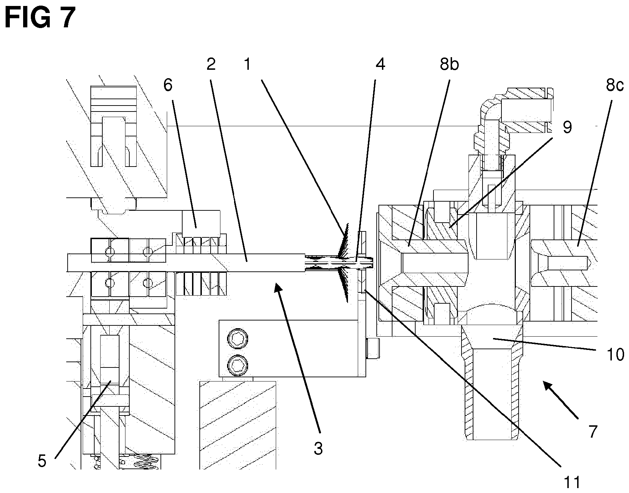

Eine vorteilhafte Ergänzung der bislang beschriebenen Vorrichtung ist eine zwischen der Aufnahme 8 und der Halteanordnung/Klemmvorrichtung 6 angeordnete und vom abgemantelten Ende des Kabels 3 in Richtung des noch von der Ummantelung 2 umhüllten Abschnitts des Kabels 3 in axialer Richtung verfahrbare Scheibe 11 mit einer Durchtrittsöffnung für das Kabel 3 gegeben, wie in Fig. 7 gezeigt ist. Diese Scheibe 11 besteht vorzugsweise aus zumindest zwei im Wesentlichen radial zum Kabel bewegbaren Teilen. Der Durchmesser der Durchtrittsöffnung ist geringfügig grösser als jener der innerhalb des Schirms 1 liegenden Elemente des Kabels 3. Im Zuge eines durch die Steuereinrichtung aktivierbaren Ablaufs, bei dem nach der Schirmbearbeitung eine Annäherung der Scheibe 11 an die Halteanordnung/Klemmvorrichtung 6 des Kabels 3 erfolgt, wird der Schirm 1 zurückgestülpt und liegt schliesslich einer vorzugsweise vorhandenen Stützhülse und/oder der Umhüllung 2 des Kabels 3 an. Durch diese Scheibe 11 wird der Schirm 1 bereits in der Schneidestation in seine endgültige Lage für die weitere Verarbeitung gebracht.

Nach Beendigung aller oben erläuterten Abläufe wird auch die Haltevorrichtung 6 wieder geöffnet und das nicht mehr geklemmte Kabel 3 kann mit geschnittenem Schirm 1 durch die Transportpalette 5 wieder abtransportiert, vorzugsweise zu einer nachfolgenden Bearbeitungsstation angeliefert, werden.

Besonders vorteilhaft ist die Verwendung der erfindungsgemässen Vorrichtung in einer Anlage zur Bearbeitung eines mehradrigen Kabels, insbesondere für HSD-Produkte. Die Vorrichtung kann dabei als eine von mehreren vollautomatischen Bearbeitungsstationen vorgesehen sein, die neben dem Schneiden und Zurückstülpen des Schirms 1 auch das vorhergehende Abmanteln, das Öffnen und Aufstellen des Schirms 1, das Entfernen einer allfälligen Folie und das Entfernen eines allfälligen innenliegende Füllers bewerkstelligen. Für den vollautomatischen Betrieb ist weiters noch eine Transportvorrichtung zum Transport von abgelängten Kabeln von und zu den Stationen sowie zu einer vorzugsweise ebenfalls vollautomatischen Verarbeitungsanlage vorgesehen.

### Bezugszeichenliste

- 1: Schirm
- 2: Ummantelung
- 3: Kabel
- 4: Leiter, Litzen
- 5: Transportpalette
- 6: Halteanordnung/Klemmeinrichtung
- 7: Bearbeitungskopf
- 8: Aufnahme für Kabel
- 8a: Durchführöffnung
- 8b, 8c: Abschnitte der Aufnahme
- 9: Ring mit Schneidkante
- 10: Absaugöffnung
- 11: Scheibe

## Patentansprüche

1. Vorrichtung zum Schneiden eines aufgestellten Schirms (1) eines Kabels (3), umfassend eine Halteanordnung/Klemmvorrichtung (6) zum Klemmen des abgemantelten und vorzugsweise mit einer Stützhülse versehenen Kabels (3), vorzugsweise mit einer Zentriereinrichtung, mit einer Schneideeinrichtung, umfassend eine buchsenförmige Aufnahme (8) für das abgemantelte Ende des Kabels (3), sowie eine Sensor- und Steuereinrichtung für die Vorrichtung, allenfalls als Modul einer übergeordneten Anlagensteuerung, wobei die buchsenförmige Aufnahme (8) in axialer Richtung aus zwei relativ zueinander bewegbaren Abschnitten (8b, 8c) besteht, wobei die einander zugewandten Stirnseiten der Abschnitte (8b, 8c) je eine ringförmige Klemm- und Fixierfläche im radial äusseren Bereich aufweisen, die in einer Endstellung aneinander anliegen,
dass die Schneideeinrichtung (9) zumindest eine ausserhalb der buchsenförmigen Aufnahme (8) bzw. der ringförmigen Klemm- und Fixierflächen bewegliche, vorzugsweise ringförmige, Schneide aufweist und
dass die buchsenförmige Aufnahme (8) eine im Wesentlichen zylindermantelförmige äussere Oberfläche aufweist und die Schneideeinrichtung durch einen Ring (9) gebildet ist, der eine innere ringförmige Schneidekante aufweist, **dadurch gekennzeichnet, dass** der Ring (9) Z axial entlang der äusseren Oberfläche der Aufnahme (8) über die Ebene der einander zugewandten Stirnseiten der beiden Abschnitte (8b, 8c) der Aufnahme (8) verschiebbar ist.

2. Vorrichtung nach Anspruch 1, **dadurch gekennzeichnet, dass** die einander zugewandten Stirnflächen der beiden relativ zueinander bewegbaren Abschnitte (8b, 8c) der Aufnahme im Wesentlichen jeweils einen sich in Richtung auf die Halteanordnung/Klemmvorrichtung (6) hin öffnenden Konus bilden.

3. Vorrichtung nach Anspruch 1 oder 2, **dadurch gekennzeichnet, dass** der der Halteanordnung/Klemmvorrichtung (6) zugewandte Abschnitt (8b) der Aufnahme (8) mit einem sich auf die Halteanordnung/Klemmvorrichtung (6) hin öffnenden Führungskonus versehen ist.

4. Vorrichtung nach einem der vorhergehenden Ansprüche, **dadurch gekennzeichnet, dass** der von der Halteanordnung/Klemmvorrichtung (6) entferntere Abschnitt (8c) der Aufnahme (8) mit einem sich auf die Halteanordnung/Klemmvorrichtung (6) hin öffnenden Führungskonus versehen ist.

5. Vorrichtung nach einem der vorhergehenden Ansprüche, **dadurch gekennzeichnet, dass** die Steuereinrichtung ausgelegt ist, im Betriebsfall eine axiale Relativbewegung des der Halteanordnung/Klemmvorrichtung (6) zugewandten Abschnitts (8b) der Aufnahme (8) und der Halteanordnung/Klemmvorrichtung (6) in einer Länge zu bewirken, bis der Schirm (1) zur Gänze durch den der Halteanordnung/Klemmvorrichtung (6) zugewandten Abschnitt (8b) hindurchgeführt ist, wobei in diesem Betriebsfall die beiden Abschnitte (8b, 8c) der Aufnahme (8) voneinander beabstandet sind oder im Zuge der Relativbewegung von Aufnahme (8) und Halteanordnung/Klemmvorrichtung (6) axial voneinander weg verfahrbar sind, wonach die Halteanordnung/Klemmvorrichtung (6) und der der Halteanordnung/Klemmvorrichtung (6) zugewandte Abschnitt (8b) der Aufnahme (8) ein Stück in Gegenrichtung bewegbar ist, so dass der Schirm (1) an der der Halteanordnung/Klemmvorrichtung (6) abgewandten Stirnseite des der Halteanordnung/Klemmvorrichtung (6) näherliegenden Abschnitts (8b) anliegt, wonach die beiden Abschnitte (8b, 8c) der Aufnahme (8) aufeinander zu verfahrbar sind bis der Schirm (1) zwischen den beiden Stirnseiten geklemmt ist, wonach die Schneideeinrichtung (9) aktivierbar ist.

6. Vorrichtung nach einem der Ansprüche vorhergehenden Ansprüche, **dadurch gekennzeichnet, dass** im Bereich der einander zugewandten Stirnseiten der beiden Abschnitte (8b, 8c) der Aufnahme (8) zumindest eine mit einer Absaugeinrichtung verbundene Absaugöffnung (10) mündet.

7. Vorrichtung nach einem der Ansprüche vorhergehenden Ansprüche, **dadurch gekennzeichnet, dass** zwischen der Aufnahme (8) und der Halteanordnung/Klemmvorrichtung (6) eine vom abgemantelten Ende in Richtung des noch umhüllten Abschnitts des Kabels (3) in axialer Richtung verfahrbare Scheibe (11) mit einer Durchtrittsöffnung für das Kabel (3) vorgesehen ist, welche Scheibe (11) aus zumindest zwei im Wesentlichen radial zum Kabel (3) bewegbaren Teilen besteht, wobei der Durchmesser der Durchtrittsöffnung geringfügig grösser ist als jener der innerhalb des Schirms (1) liegenden Elemente des Kabels (3), und die Steuereinrichtung ausgelegt ist, nach der Schirmbearbeitung eine Annäherung der Scheibe (11) an die Halteanordnung/Klemmvorrichtung (6) entlang des Kabels in einer Länge zu bewirken, bis der Schirm (1) an einer vorzugsweise vorhandenen Stützhülse und/oder dem Kabelmantel (2) anliegt.

## Claims

1. An apparatus for cutting an erected shield (1) of a cable (3), comprising a holding/clamping apparatus (6) for clamping the desheathed cable (3), which is preferably provided with a supporting sleeve, preferably with a centring device, with a cutting device, comprising a socket-like receptacle (8) for the desheathed end of the cable (3), and a sensor and control device for the apparatus, if necessary as a module of a higher-level system controller, the socket-like receptacle (8) consisting in the axial direction of two sections (8b, 8c) which can move relative to each other, the mutually facing end faces of the sections (8b, 8c) each having an annular clamping and fixing face in the radially outer region, said clamping and fixing faces bearing against each other in an end position, the cutting device (9) having at least one preferably annular blade which is movable outside the socket-like receptacle (8) and the annular clamping and fixing faces, and the socket-like receptacle (8) having an outer surface which is substantially shaped like a cylinder lateral surface, and the cutting device being formed by a ring (9) which has an inner annular cutting edge, **characterised in that** the ring (9) can be displaced axially along the outer surface of the receptacle (8) over the plane of the mutually facing end faces of the two sections (8b, 8c) of the receptacle (8) .

2. The apparatus according to Claim 1, **characterised in that** the mutually facing end faces of the two sections (8b, 8c) of the receptacle which can be moved relative to each other each substantially form a cone which is open towards the holding/clamping apparatus (6).

3. The apparatus according to Claim 1 or 2, **characterised in that** the section (8b) of the receptacle (8) facing the holding/clamping apparatus (6) is provided with a guide cone which is open towards the holding/clamping apparatus (6).

4. The apparatus according to any one of the preceding claims, **characterised in that** the section (8c) of the receptacle (8) which is more remote from the holding/clamping apparatus (6) is provided with a guide cone which is open towards the holding/clamping apparatus (6).

5. The apparatus according to any one of the preceding claims, **characterised in that** the control device is designed, during operation, to effect an axial relative movement of the section (8b) of the receptacle (8) facing the holding/fixing apparatus (6) and the holding/fixing apparatus (6) lengthways until the shield (1) is fed entirely through the section (8b) facing the holding/fixing apparatus (6), wherein, in this operating case, the two sections (8b, 8c) of the receptacle (8) are spaced from each other or can be moved away axially from each other during the relative movement of the receptacle (8) and the holding/fixing apparatus (6), after which the holding/fixing apparatus (6) and the section (8b) of the receptacle (8) facing the holding/fixing apparatus (6) can be moved a little in the opposite direction so that the shield (1) bears against the end face, facing away from the holding/fixing apparatus (6), of the section (8b) lying closer to the holding/fixing apparatus (6), after which the two sections (8b, 8c) of the receptacle (8) can be moved towards each other until the shield (1) is clamped between the two end faces, after which the cutting device (9) can be activated.

6. The apparatus according to any one of the preceding claims, **characterised in that** at least one suction opening (10), which is connected to a suction device, opens in the region of the mutually facing end faces of the two sections (8b, 8c) of the receptacle (8).

7. The apparatus according to any one of the preceding claims, **characterised in that** between the receptacle (8) and the holding/fixing apparatus (6) there is a disc (11), which can be moved in the axial direction from the desheathed end towards the still sheathed section of the cable (3) and has a through-opening for the cable (3), which disc (11) consists of at least two parts which can move substantially radially to the cable (3), wherein the diameter of the through-opening is slightly larger than that of the elements of the cable (3) inside the shield (1), and the control device is designed, after shield processing, to cause the disc (11) to come closer to the holding/fixing apparatus (6) along the cable lengthways until the shield (1) bears against a supporting sleeve which is preferably present and/or the cable sheath (2).

## Revendications

1. Dispositif pour couper un blindage installé (1) d'un câble (3), comprenant un agencement de maintien/ dispositif de serrage (6) pour serrer le câble dénudé et de préférence pourvu d'un manchon de support fourni (3), comportant de préférence un dispositif de centrage, avec un dispositif de coupe, comprenant un réceptacle en forme de douille (8) pour l'extrémité dénudée du câble (3), ainsi qu'un dispositif de commande et de détection pour le dispositif, éventuellement en tant que module d'une commande de système de niveau supérieur, dans lequel le réceptacle en forme de douille (8) est constitué dans la direction axiale de deux sections (8b, 8c) mobiles l'une par rapport à l'autre, dans lequel les côtés frontaux tournés l'un vers l'autre des sections (8b, 8c) présentent respectivement une surface annulaire de serrage et de fixation dans la zone radialement extérieure, qui dans une position d'extrémité reposent l'un contre l'autre de sorte que le dispositif de coupe (9) présente au moins un tranchant de coupe, de préférence en forme d'anneau, qui est mobile à l'extérieur du réceptacle en forme de douille (8) ou des surfaces de serrage et de fixation en forme d'anneau et que le réceptacle en forme de douille (8) présente une surface extérieure en forme d'enveloppe sensiblement cylindrique et le dispositif de coupe est formé par une bague (9) qui présente une arête de coupe annulaire interne, **caractérisé en ce que** la bague (9) est déplaçable axialement le long de la surface externe du réceptacle (8) sur le plan des côtés frontaux tournés l'un vers l'autre des deux sections(8b, 8c) du réceptacle (8).

2. Dispositif selon la revendication 1, **caractérisé en ce que** les côtés frontaux tournés l'un vers l'autre des deux sections (8b, 8c) mobiles l'une par rapport à l'autre du réceptacle forment un cône s'ouvrant essentiellement respectivement dans la direction de l'agencement de maintien/dispositif de serrage (6).

3. Dispositif selon la revendication 1 ou 2, **caractérisé en ce que** la section (8b) du réceptacle (8) tournée vers l'agencement de maintien/dispositif de serrage (6) est pourvue d'un cône de guidage s'ouvrant dans la direction de l'agencement de maintien/dispositif de serrage (6).

4. Dispositif selon une des revendications précédentes, **caractérisé en ce que** la section plus éloignée (8c) de l'agencement de maintien/dispositif de serrage (6) du réceptacle (8) est pourvue d'un cône de guidage s'ouvrant dans la direction de l'agencement de maintien/dispositif de serrage (6).

5. Dispositif selon une des revendications précédentes, **caractérisé en ce que** le dispositif de commande est conçu afin de provoquer dans un cas de fonctionnement un mouvement relatif axial de la section (8b) du réceptacle (8) tournée vers l'agencement de maintien/dispositif de serrage (6) et de l'agencement de maintien/dispositif de serrage (6) sur une longueur jusqu'à ce que le blindage (1) soit complètement passé à travers la section (8b) tournée vers l'agencement de maintien/ dispositif de serrage (6), auquel cas les deux sections (8b, 8c) du réceptacle (8) sont espacées l'une de l'autre ou au cours du mouvement relatif du récipient (8) et de l'agencement de maintien/ dispositif de serrage (6) peuvent être éloignées axialement l'un de l'autre, après quoi l'agencement de maintien/dispositif de serrage (6) et la section (8b) du réceptacle tournée vers l'agencement de maintien/ dispositif de serrage (6) peut être légèrement déplacée dans la direction opposée de sorte que le blindage (1) vienne reposer sur le côté frontal se détournant de l'agencement de maintien/dispositif de serrage (6) de la section (8b) plus proche de l'agencement de maintien/ dispositif de serrage (6), après quoi les deux sections (8b, 8c) du réceptacle (8) peuvent être déplacées l'une vers l'autre jusqu'à ce que le blindage (1) soit serré entre les deux côtés frontaux, après quoi le dispositif de coupe (9) peut être activé.

6. Dispositif selon une des revendications précédentes, **caractérisé en ce que** dans la zone des faces frontales tournées l'une vers l'autre des deux sections (8b, 8c) du réceptacle (8) au moins une ouverture d'aspiration (10) reliée à un dispositif d'aspiration s'ouvre.

7. Dispositif selon une des revendications précédentes, **caractérisé en ce qu'**entre le réceptacle (8) et l'agencement de maintien/dispositif de serrage (6) un disque (11) avec une ouverture traversante destinée au câble (3), déplaçable dans la direction axiale à partir de l'extrémité dénudée dans la direction de la section encore gainée du câble (3) est prévu, lequel disque (11) se compose d'au moins deux parties qui peuvent être déplacées essentiellement radialement par rapport au câble (3), dans lequel le diamètre de l'ouverture de passage est légèrement supérieur à celui des éléments du câble (3) situés à l'intérieur du blindage (1), et le dispositif de commande est conçu afin de provoquer conformément au traitement de blindage un rapprochement du disque (11) sur l'agencement de maintien/dispositif de serrage (6) le long du câble dans une longueur jusqu'à ce que le blindage (1) vienne reposer de préférence sur une gaine de support et/ou gaine de câble (2) existante.
